# EUROPEAN PATENT SPECIFICATION

(11) **EP 2 892 289 B1**
(45) Date of publication and mention of the grant of the patent: **28.11.2018**
(21) Application number: 12885516.0
(22) Date of filing: 27.09.2012
(51) Int. Cl.: H04W 68/02, H04W 28/02

(54) **METHOD, APPARATUS, ENTITY AND NETWORK DEVICE FOR CONTROLLING PAGE**
VERFAHREN, VORRICHTUNG, EINHEIT UND NETZWERKVORRICHTUNG ZUR SEITENSTEUERUNG
PROCÉDÉ, APPAREIL, ENTITÉ ET PÉRIPHÉRIQUE RÉSEAU DE CONTRÔLE DE PAGE

(43) Date of publication of application: 08.07.2015
(73) Proprietor: Huawei Technologies Co., Ltd., Longgang District Shenzhen, Guangdong 518129 (CN)
(72) Inventor: YIN, Yu, Shenzhen Guangdong 518129 (CN); QI, Caixia, Shenzhen Guangdong 518129 (CN); CAI, Hui, Shenzhen Guangdong 518129 (CN)
(74) Representative: Gill Jennings & Every LLP
(86) International application number: PCT/CN2012/082135
(87) International publication number: WO 2014/047825

(56) References cited:
- CN-A- 101 080 036
- CN-A- 102 340 754
- CN-A- 102 378 295
- CN-A- 102 480 786
- US-A1- 2007 171 850
- US-A1- 2010 124 223

## Description

### TECHNICAL FIELD

The present invention relates to the field of communications technologies, and in particular, to a paging control method and apparatus, an entity, and a network device.

### BACKGROUND

If a user terminal on a mobile packet network does not transmit any signaling or data for a period of time, the user terminal may switch to idle state. When the network needs to transmit signaling or data to the user terminal in idle state, the network pages, by using a paging technology, user terminals in idle state in all cells within a registration area of the user terminal. After the user terminal receives a paging message sent to it, the user terminal responds to the paging, establishes a logical connection with the network, and switches to connected state. Only a user terminal in connected state can perform data transmission with the network.

With rapid development of mobile packet networks and the mobile Internet, voice, SMS, and various other services are gradually migrated to the Internet. Paging may be triggered, for example, by Internet voice provided by applications such as Skype and Google Voice, or by an internet messaging service provided by applications such as MSN and QQ, or by a push service such as Push Mail and SNS (social networking service).

Mobile packet networks use a traffic-based charging mode, and traffic tariff is very low compared with traditional telecommunications networks. In some messaging services, for example, one or two messages or one piece of notification information contains only several hundreds of bytes, and fees charged according to traffic are very low. Because the tariff is low, users use these services frequently, causing a huge increase in the quantity of messages on a mobile communications packet network. Further, each message generally triggers paging, which means that a large quantity of messages trigger a large amount of paging, and ultimately leads to network congestion.

A data gateway on a mobile packet network, which serves as a policy enforcement node, is aware of service data flows and can perform policy control and charging based on service data flows. However, the data gateway is not aware of a state (connected state/idle state) of a user terminal. Signaling overheads generated by a paging procedure triggered by a data packet of a user terminal to restore a radio connection is not considered when the data gateway performs charging. In which case, Internet voice/messaging service users does not need to pay for overheads generated for establishing a radio connection. Due to the low cost of the Internet voice/messaging services, users use this type of services unlimitedly, thereby causing network congestion.

US 2010/0124223 A1 describes a method and system for selectively paging user equipment in a communication network. The selective paging can use information regarding the state of the user equipment and other rule-based criteria to determine whether packets received by a gateway trigger a page of the user equipment.

### SUMMARY

Embodiments of the present invention provide a paging control method and apparatus, an access gateway, a bearer connection policy control entity, a data gateway, so as to solve a technical problem in the prior art that network resources are wasted due to unlimited use of low-cost Internet voice/messaging services by users.

Aspects of the invention are set out by the appended claims.

It can be known from the foregoing technical solutions that, in the embodiments of the present invention, when a downlink data packet is received, matching is performed between the downlink data packet and at least one service data flow matching feature rule in at least one bearer connection control policy; and if the matching succeeds, a service paging policy corresponding to a matched service data flow matching feature rule is executed; if the matching fails, a default service paging policy is executed. This solves a technical problem in the prior art that network resources are wasted due to unlimited use of low-cost Internet voice/messaging services by users, and specifically solves a technical problem in performing paging policy control for user terminals in idle state, thereby improving user experience.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a paging control method according to an embodiment of the present invention;
FIG. 2 is a first schematic structural diagram of a paging control apparatus according to an embodiment of the present invention;
FIG. 3 is a second schematic structural diagram of a paging control apparatus according to an embodiment of the present invention;
FIG. 4 is a third schematic structural diagram of a paging control apparatus according to an embodiment of the present invention;
FIG. 5 is a fourth schematic structural diagram of a paging control apparatus according to an embodiment of the present invention;
FIG. 6 is a fifth schematic structural diagram of a paging control apparatus according to an embodiment of the present invention;
FIG. 7 is a sixth schematic structural diagram of a paging control apparatus according to an embodiment of the present invention;
FIG. 8 is a flowchart of a first application instance of a paging control method according to an embodiment of the present invention;
FIG. 9 is a flowchart of a second application instance of a paging control method according to an embodiment of the present invention; and
FIG. 10.A and FIG. 10B are flowcharts of a third application instance of a paging control method according to an embodiment of the present invention.

### DESCRIPTION OF EMBODIMENTS

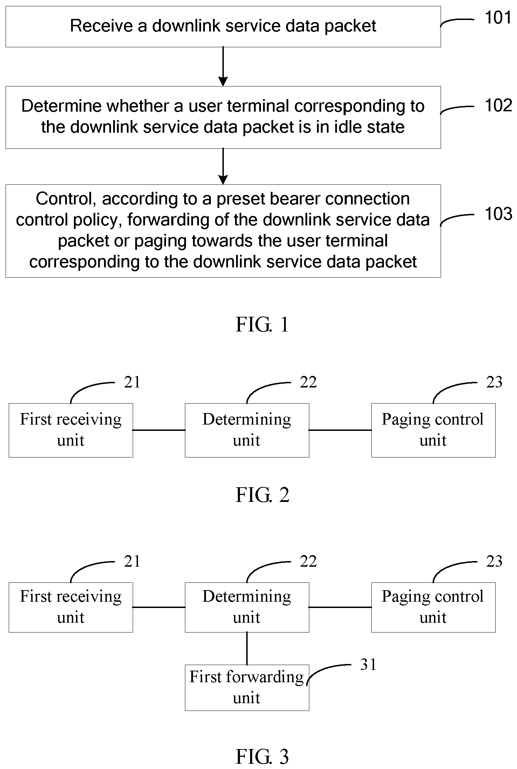

Referring to FIG. 1, FIG. 1 is a flowchart of a paging control method according to an embodiment of the present invention. The method includes the following steps:
Step 101: Receive a downlink service data packet.

In step 101, a network element receiving a downlink service data packet may be an access gateway receiving a downlink service data packet sent by a bearer connection policy control entity, or a bearer connection policy control entity receiving a downlink service data packet sent by an application server, or a data gateway receiving a downlink service data packet sent by an application server. Certainly, the network element is not limited thereto, and may also be another network element, which is not limited in this embodiment.

Step 102: Determine whether a user terminal corresponding to the downlink service data packet is in idle state.

Step 103: If the user terminal is in idle state, perform matching between the downlink service data packet and at least one bearer connection control policy, and control, according to a matched bearer connection control policy, paging towards the user terminal corresponding to the downlink service data packet.

The bearer connection control policy may include but is not limited to a service data flow matching feature rule and/or a service paging policy.

According to the description of step 101, step 103 may be implemented in various manners, and is not limited to the following three manners:
The first manner is as follows: An access gateway performs matching between the downlink service data packet and at least one bearer connection control policy, and controls, according to a matched bearer connection control policy, paging towards the user terminal corresponding to the downlink service data packet. This manner specifically includes: performing, by the access gateway, matching between the downlink service data packet and at least one service data flow matching feature rule in the at least one bearer connection control policy; and if the matching succeeds, executing a service paging policy corresponding to a matched service data flow matching feature rule; if the matching fails, executing a default service paging policy.

In this embodiment, the bearer connection control policy may be stored in the access gateway in advance, or may be acquired by the access gateway from a bearer connection policy control entity, or may be proactively delivered by a bearer connection policy control entity to the access gateway.

The second manner is as follows: A bearer connection policy control entity performs matching between the downlink service data packet and at least one bearer connection control policy, and controls, according to a matched bearer connection control policy, paging towards the user terminal corresponding to the downlink service data packet. This manner specifically includes: performs, by the bearer connection policy control entity, matching between the downlink service data packet and at least one service data flow matching feature rule in the at least one bearer connection control policy; if the matching succeeds, determining, according to a service paging policy corresponding to a matched service data flow matching feature rule, whether an access gateway needs to be notified to initiate paging towards the user terminal corresponding to the downlink service data packet; and if yes, notifying the access gateway to initiate paging towards the user terminal corresponding to the downlink service data packet; if not, refusing to forward the downlink service data packet. If the matching fails, executing a default service paging policy, in other words, controlling forwarding of the downlink service data packet according to the default service paging policy.

In this embodiment, the bearer connection control policy is stored in the bearer connection policy control entity in advance, or may be delivered by a network element such as an OAM unit or the like.

The third manner is as follows: A data gateway performs matching between the downlink service data packet and at least one bearer connection control policy, and controls, according to a matched bearer connection control policy, paging towards the user terminal corresponding to the downlink service data packet. This manner specifically includes: performing, by the data gateway, matching between the downlink service data packet and at least one service data flow matching feature rule in the at least one bearer connection control policy; and if the matching succeeds, executing a service paging policy corresponding to a matched service data flow matching feature rule; if the matching fails, executing a default service paging policy. In other words, if the matching succeeds and it is determined that paging is needed, the downlink service data packet is forwarded to the access gateway; if the matching succeeds and it is determined that paging is not needed, the downlink service data packet is discarded.

In this embodiment, the bearer connection control policy may be stored in the data gateway in advance, or may be acquired by the data gateway from a bearer connection policy control entity, or may be proactively delivered by a bearer connection policy control entity to the data gateway.

In this embodiment, when a downlink data packet is received, matching is performed between the downlink data packet and at least one service data flow matching feature rule in at least one bearer connection control policy; and if the matching succeeds, a service paging policy corresponding to a matched service data flow matching feature rule is executed; if the matching fails, a default service paging policy is executed. This solves a technical problem in the prior art that network resources are wasted due to unlimited use of low-cost Internet voice/messaging services by users, and specifically solves a technical problem in performing paging policy control for user terminals in idle state, thereby improving user experience.

Optionally, the method may further include: when the downlink service data packet is received, if the user terminal is in idle state, determining whether the user terminal corresponding to the downlink service data packet is in idle state; and if not, forwarding the downlink service data packet directly; if yes, executing the step of performing matching between the downlink service data packet and at least one bearer connection control policy, and controlling, according to a matched bearer connection control policy, paging towards the user terminal corresponding to the downlink service data packet. For a specific implementation process of performing matching between the downlink service data packet and at least one bearer connection control policy, and controlling, according to a matched bearer connection control policy, paging towards the user terminal corresponding to the downlink service data packet, refer to the foregoing first manner or third manner, which is not further described herein.

Optionally, in the second manner, the bearer connection policy control entity performs matching between the downlink service data packet with at least one service data flow matching feature rule in at least one bearer connection control policy; and if the matching succeeds, the bearer connection policy control entity notifies the access gateway to initiate paging towards the user terminal corresponding to the downlink service data packet; if the matching fails, the bearer connection policy control entity refuses to forward the downlink service data packet. The notification may include paging priority parameter information, so that the access gateway initiates, according to the paging priority parameter information, paging towards the user terminal corresponding to the downlink service data packet.

In this embodiment, the notification and the downlink service data packet may be sent to the user terminal simultaneously, or the bearer connection policy control entity sends the notification to the access gateway first, and when receiving an acknowledgment message sent by the access gateway, the bearer connection policy control entity forwards the downlink service data packet to the access gateway.

Optionally, after the access gateway receives the notification sent by the bearer connection policy control entity, the method may further include: determining, by the access gateway, whether the user terminal corresponding to the downlink service data packet is in connected state; and if yes, forwarding the downlink service data packet to the user terminal; if not, initiating paging towards the user terminal corresponding to the downlink service data packet.

Optionally, after the access gateway receives the notification sent by the bearer connection policy control entity, the method may further include: determining, by the access gateway, whether the user terminal corresponding to the notification is in idle state;
if the user terminal is in connected state (that is, a non-idle state), sending, by the access gateway, an acknowledgement message to the bearer connection policy control entity; receiving the downlink service data packet sent by the bearer connection policy control entity, and forwarding the downlink service data packet to the user terminal; or
if the user terminal is in idle state, triggering, by the access gateway, paging to restore a radio connection; after switching the user terminal to connected state, sending an acknowledgement message to the bearer connection policy control entity; and when receiving the downlink service data packet sent by the bearer connection policy control entity, forwarding the downlink service data packet to the user terminal.

Optionally, in the second manner, the method may further include: delivering, by the bearer connection policy control entity, a connection persistence policy for a service data flow corresponding to the downlink service data packet to the access gateway, so that the access gateway executes the connection persistence policy for the user terminal corresponding to the downlink service data packet over a subsequent preset period of time.

Optionally, in the third manner, the method may further include: receiving, by the data gateway, state information of the user terminal sent by the access gateway; if it is determined, according to the state information of the user terminal, that the user terminal corresponding to the downlink service data packet is in connected state, forwarding, by the data gateway, the downlink service data packet to the access gateway; if it is determined, according to the state information of the user terminal, that the user terminal corresponding to the downlink service data packet is in idle state, performing, by the data gateway, matching between the downlink service data packet and at least one bearer connection control policy, and controlling, according to a matched bearer connection control policy, paging towards the user terminal corresponding to the downlink service data packet, in other words, performing matching between the downlink service data packet and at least one service data flow matching feature rule in the at least one bearer connection control policy, and if the matching succeeds, controlling forwarding of the corresponding downlink service data packet according to a service paging policy corresponding to a matched service data flow matching feature rule, or if the matching fails, controlling forwarding of the downlink service data packet according to a default service paging policy.

Optionally, in this embodiment, the data gateway and/or the bearer connection policy control entity charges fees for the forwarded downlink service data packet.

In this embodiment of the present invention, a bearer network of an operator is aware of establishment of application layer sessions, so that the bearer network can control the establishment of application layer sessions according to a user terminal state. In which case, Internet service providers have to pay an appropriate fee for radio connection maintenance and benefits of telecom operators are protected. In addition, by making use of price leverage, unlimited use of Internet voice/messaging services by user terminals are reduced, which avoids impact on mobile communications networks and increases utilization of network resources. Further, paging towards a user terminal in idle state is effectively controlled, thereby improving user experience.

Accordingly, an embodiment of the present invention further provides a paging control apparatus. For a schematic structural diagram of the paging control apparatus, refer to FIG. 2. The apparatus includes a first receiving unit 21, a determining unit 22, and a paging control unit 23, where the first receiving unit 21 is configured to receive a downlink service data packet; the determining unit 22 is configured to determine whether a user terminal corresponding to the downlink service data packet is in idle state; and the paging control unit 23 is configured to: when the determining unit 22 determines that the user terminal is in idle state, perform matching between the downlink service data packet and at least one bearer connection control policy, and control, according to a matched bearer connection control policy, paging towards the user terminal corresponding to the downlink service data packet. The bearer connection control policy may include but is not limited to a service data flow matching feature rule and/or a paging policy for a service data flow.

Optionally, based on the embodiment shown in FIG. 2, the apparatus may further include a first forwarding unit 31. For a schematic structural diagram of the first forwarding unit 31, refer to FIG. 3. FIG. 3 is a second schematic structural diagram of a paging control apparatus according to an embodiment of the present invention. The first forwarding unit 31 is configured to: when the determining unit 22 determines that the user terminal is in connected state, forward the downlink service data packet to the user terminal.

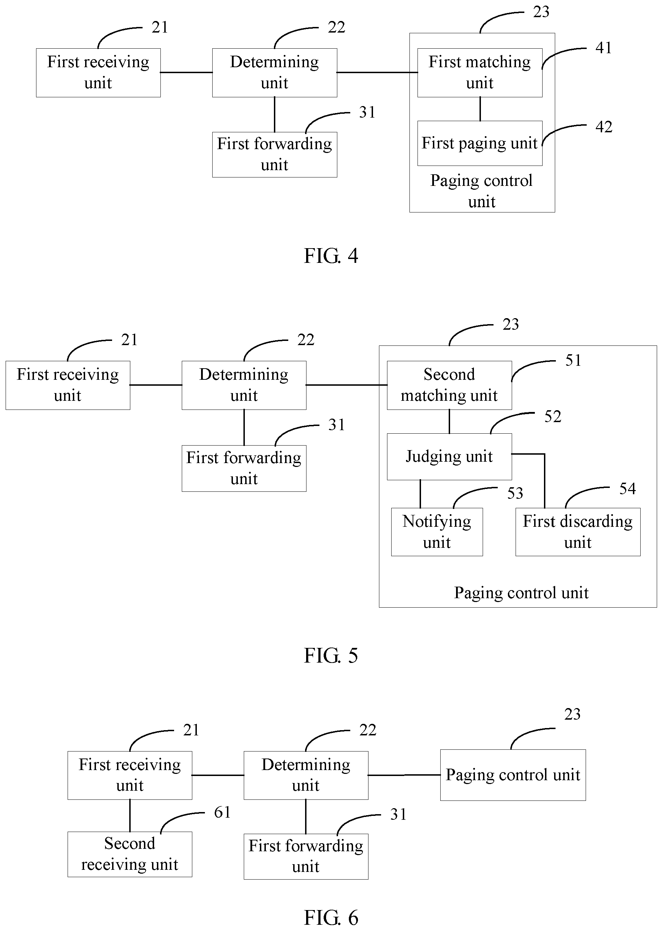

Optionally, based on the embodiment shown in FIG. 2 or FIG. 3, the paging control unit 23 includes a first matching unit 41 and a first paging unit 42. For a schematic structural diagram of the paging control unit 23, refer to FIG. 4. FIG. 4 is a third schematic structural diagram of a paging control apparatus according to an embodiment of the present invention. FIG. 4 is based on FIG. 3, but is not limited to FIG. 3. In FIG. 4, the first matching unit 41 is configured to perform matching between the downlink service data packet and at least one service data flow matching feature rule in at least one bearer connection control policy; and the first paging unit 42 is configured to: when the matching performed by the first matching unit 41 is successful, execute paging according to a service paging policy corresponding to a matched service data flow matching feature rule.

Optionally, based on the embodiment shown in FIG. 2 or FIG. 3, the paging control unit includes a second matching unit 51, a judging unit 52, a notifying unit 53, and a first discarding unit 54. For a schematic structural diagram of the paging control unit, refer to FIG. 5. FIG. 5 is a fourth schematic structural diagram of a paging control apparatus according to an embodiment of the present invention. In FIG. 5, the second matching unit 51 is configured to perform matching between the downlink service data packet and at least one service data flow matching feature rule in at least one bearer connection control policy; the judging unit 52 is configured to: when the matching performed by the second matching unit 51 is successful, determine, according to a service paging policy corresponding to a matched service data flow matching feature rule, whether an access gateway needs to be notified to initiate paging towards the user terminal corresponding to the downlink service data packet; the notifying unit 53 is configured to: when the judging unit 52 determines that an access gateway needs to be notified, notify the access gateway to initiate paging towards the user terminal corresponding to the downlink service data packet; and the first discarding unit 54 is configured to: when the judging unit 52 determines that an access gateway does not need to be notified, discard the downlink service data packet.

Optionally, based on the embodiment shown in FIG. 5, the apparatus may further include: a first sending unit, configured to: when the notifying unit notifies the access gateway to initiate paging towards the user terminal corresponding to the downlink service data packet, deliver paging priority parameter information corresponding to the downlink service data packet to the access gateway, so that after receiving the paging priority parameter information, the access gateway initiates, according to the paging priority parameter information, paging towards the user terminal corresponding to the downlink service data packet.

Optionally, based on the embodiment shown in FIG. 5, the apparatus may further include: a second sending unit, configured to: when the notifying unit notifies the access gateway to initiate paging towards the user terminal corresponding to the downlink service data packet, deliver a connection persistence policy for a service data flow corresponding to the downlink service data packet to the access gateway, so that the access gateway executes, after receiving the connection persistence policy, the connection persistence policy for the user terminal corresponding to the downlink service data packet over a subsequent preset period of time.

Optionally, based on the embodiment shown in FIG. 2 or FIG. 3, the apparatus may further include a second receiving unit 61. For a schematic structural diagram of the second receiving unit 61, refer to FIG. 6. FIG. 6 is a fifth schematic structural diagram of a paging control apparatus according to an embodiment of the present invention. In FIG. 6, the second receiving unit 61 is configured to: before or after the first receiving unit 21 receives a downlink service data packet, receive state information of the user terminal sent by the access gateway; and the determining, by the determining unit 22, whether a user terminal corresponding to the downlink service data packet is in idle state is specifically: determining, according to the state information of the user terminal, whether the user terminal corresponding to the downlink service data packet is in idle state.

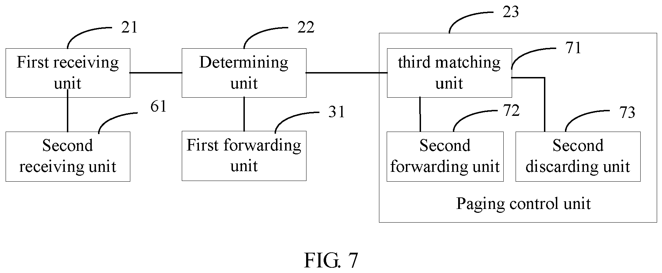

Based on the embodiment shown in FIG. 6, the paging control unit includes a third matching unit 71, a second forwarding unit 72, and a second discarding unit 73. For a schematic structural diagram of the paging control unit, refer to FIG. 7. FIG. 7 is a sixth schematic structural diagram of a paging control apparatus according to an embodiment of the present invention. In FIG. 7, the third matching unit 71 is configured to perform matching between the downlink service data packet and at least one service data flow matching feature rule in at least one bearer connection control policy; and if the matching succeeds; the second forwarding unit 72 is configured to: when the matching performed by the third matching unit 71 is successful, forward the downlink service data packet to the access gateway; and the second discarding unit 73 is configured to: when the matching performed by the third matching unit 71 is unsuccessful, discard the downlink service data packet.

For a detailed process of implementing functions and roles of each unit in the apparatus, refer to a corresponding implementation process in the foregoing method, and details are not further described herein.

Accordingly, an embodiment of the present invention further provides an access gateway. The access gateway includes a paging control apparatus, where the paging control apparatus is connected to a bearer connection policy control entity and a user terminal separately. The paging control apparatus is configured to: receive a downlink service data packet sent or forwarded by the bearer connection policy control entity; and if a user terminal corresponding to the downlink service data packet is in idle state, perform matching between the downlink service data packet and at least one bearer connection control policy, and control, according to a matched bearer connection control policy, paging towards the user terminal corresponding to the downlink service data packet.

For a detailed process of implementing functions and roles of each unit in the paging control apparatus, refer to the foregoing description, and details are not further described herein.

Accordingly, an embodiment of the present invention further provides a bearer connection policy control entity, including a paging control apparatus, where the paging control apparatus is connected to an access gateway and an application server separately. The bearer connection policy control entity is configured to: receive a downlink service data packet sent by the application server; if a user terminal corresponding to the downlink service data packet is in idle state, perform matching between the downlink service data packet and at least one bearer connection control policy; if the matching succeeds, determine, according to a service paging policy corresponding to a matched service data flow matching feature rule, whether the access gateway needs to be notified to initiate paging towards the user terminal corresponding to the downlink service data packet; and if yes, notify the access gateway to initiate paging towards the user terminal corresponding to the downlink service data packet.

For a detailed process of implementing functions and roles of each unit in the paging control apparatus, refer to the foregoing description, and details are not further described herein.

Accordingly, an embodiment of the present invention further provides a data gateway, where the data gateway includes a paging control apparatus; and the paging control apparatus is connected to an access gateway, a bearer connection policy control entity, and an application server separately. The paging control apparatus is configured to: receive a bearer connection control policy sent by the bearer connection policy control entity and a downlink service data packet sent by the application server; receive user terminal state information sent by the access gateway; if it is determined, according to the user terminal state information, that a user terminal corresponding to the downlink service data packet is in idle state, perform matching between the downlink service data packet and at least one bearer connection control policy, and control, according to a matched bearer connection control policy, paging towards the user terminal corresponding to the downlink service data packet; or if it is determined, according to the user terminal state information, that a user terminal corresponding to the downlink service data packet is in connected state, forward the downlink service data packet to the access gateway; and if the state information of the user terminal is idle state.

For a detailed process of implementing functions and roles of each unit in the paging control apparatus, refer to the foregoing description, and details are not further described herein.

Accordingly, an embodiment of the present invention further provides a network device, where the network device includes a transceiver and a processor. The transceiver is configured to receive a downlink service data packet; and the processor is configured to determine whether a user terminal corresponding to the downlink service data packet received by the transceiver is in idle state; and when the user terminal is in idle state, perform matching between the downlink service data packet and at least one bearer connection control policy, and control, according to a matched bearer connection control policy, paging towards the user terminal corresponding to the downlink service data packet.

Optionally, the network device may be an access gateway, a data gateway, or a bearer connection policy control entity, and may also be another entity with a similar function, which is not limited in this embodiment.

To help a person of ordinary skill in the art understand the present invention, the following uses specific application instances for description.

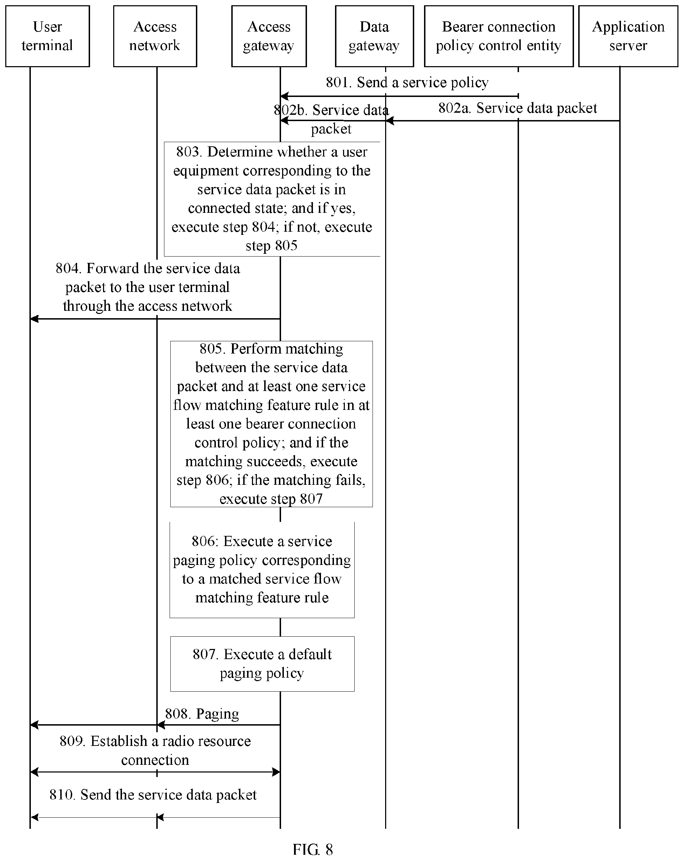

Referring to FIG. 8, FIG. 8 is a flowchart depicting a first application instance of a paging control method according to an embodiment of the present invention. In this embodiment, a radio access network may be an access technology such as a UTRAN, a GERAN, an E-UTRAN or the like; an access gateway may be an SGSN, an MME, an SGW, or an AGW; a data gateway may be a GGSN or a PDN-GW; and an application server may be an AF and is configured to provide a variety of services. The method specifically includes the following steps:
Step 801: A bearer connection policy control entity delivers a preset bearer connection control policy to an access gateway.

The bearer connection policy control entity delivers a bearer connection control policy to an access gateway according to a service agreement with a service provider, subscription data of a user, a local policy of an operator, or the like. The bearer connection policy control entity may be a network element co-located with a PCRF, or may be a network element such as an operation and maintenance (OAM, Operation and Maintenance) unit. The bearer connection control policy includes but is not limited to a service data flow matching feature rule and/or a service paging policy.

The bearer connection control policy may be at a granularity of device, at a granularity of APN, at a granularity of user, at a granularity of bearer, at a granularity of PDP context, at a granularity of service data flow (SDF, Service Data Flow), or a combination thereof.

In a specific implementation, the bearer connection policy control entity may forward the bearer connection control policy to the access gateway through the data gateway; or the bearer connection policy control entity directly delivers the bearer connection control policy to the access gateway by using an interface connected to the access gateway.

The bearer connection policy control entity may deliver the bearer connection control policy by using a signaling message in an ongoing signaling procedure on a mobile communications network. The bearer connection policy control entity may also deliver the bearer connection control policy by initiating a signaling procedure proactively.

When receiving the bearer connection control policy, the access gateway stores the bearer connection control policy.

Step 802a: An application server sends a service data packet to a data gateway.

Step 802b: The data gateway forwards the service data packet to the access gateway.

Step 803: After receiving the service data packet, the access gateway determines whether a user terminal corresponding to the service data packet is in connected state; and if yes, executes step 804; if not, executes step 805.

Step 804: If yes, the access gateway forwards the service data packet to the user terminal through an access network.

Step 805: If the user terminal corresponding to the service data packet is in idle state, perform matching between the service data packet and at least one service data flow matching feature rule in at least one bearer connection control policy; and if the matching succeeds, execute step 806; if the matching fails, execute step 807.

Step 806: The access gateway executes a service paging policy corresponding to the matched service data flow matching feature rule.

Specifically, if the user terminal is in idle state, which means that a radio connection of the user terminal corresponding to the service data packet has already been released, the access gateway performs matching between information (for example, a source IP address) carried in the service data packet and other information (for example, current time, a user location, an APN, a user subscription type, a bearer/PDP context attribute of service data packet transmission) and at least one service data flow matching feature rule in at least one stored bearer connection control policy, and executes a service paging policy corresponding to a matched service data flow matching feature rule.

The service paging policy may include:
1. A whitelist: The access gateway pages the user terminal corresponding to the matched service data packet normally or preferentially.
2. A blacklist: The access gateway discards the data packet directly and does not perform paging, or lowers a priority of the paging.

Step 807: The access gateway executes a default paging policy for a service data packet that does not match the bearer connection control policy, for example, the access gateway discards the service data packet and does not perform paging, lowers a priority of the paging, or performs paging normally. Optionally, the method may further include: acquiring, by the access gateway, current state information of the user terminal and an operator policy. While executing a service paging policy corresponding to the matched service data flow matching feature rule, the access gateway may further execute a more complex paging policy control according to the current state information of the user terminal and the operator policy, for example, for a particular type of service data packet of a particular type of user terminal, no paging is executed in a specific time segment (for example, 17:00-21:00) or at a specific location (for example, a specific routing area (Routing Area) or a tracking area (Tracking Area)), or paging is only allowed in a specific time segment or at a specific location, or a combination of the foregoing control policies is executed.

Optionally, in this embodiment, the bearer connection control policy may also be configured on the access gateway in advance; or the service data flow matching feature rule is delivered by the bearer connection policy control entity while the service paging policy is configured on the access gateway; or the service paging policy is delivered by the bearer connection policy control entity while the service data flow matching feature rule is configured on the access gateway.

When the access gateway decides to execute a paging procedure, the method further includes the following steps:
Step 808: The access gateway initiates a paging procedure towards the user terminal in idle state, and pages the user terminal within a certain coverage.

Step 809: The user terminal receiving the paging restores a radio bearer with the access gateway, specifically, establishes a radio resource connection.

Step 810: The access gateway forwards the service data packet to the user terminal through the access network.

In this embodiment, when the access gateway includes a mobility management entity MME and a serving gateway SGW, and when the user terminal in idle state, the service data packet is cached on the serving gateway, and the paging procedure is executed by the MME. Therefore, the SGW and the MME need to cooperate to execute a service policy. The SGW determines a service paging policy. A specific determining method is the same as that in step 802. For a service data packet that requires initiation of a paging procedure, the SGW sends the service paging policy to the MME by using a downlink data packet notification message, and the MME initiates corresponding paging to the user terminal according to the service paging policy. When the access gateway includes an SGSN and an SGW, a method for the two network elements to cooperate to execute a service paging policy is the same as when the access gateway includes an MME and an SGW, and the only difference lies in that the MME is replaced by the SGSN.

In this embodiment, for some services, if no cooperation agreement is reached with a network operator, downlink forwarding channels of service data packets may be unreliable. When downlink data, for example, a called voice call request, reaches the access gateway, a user terminal corresponding to the downlink data may be in connected state or in idle state. When the user terminal is in idle state, the downlink data may be discarded directly, and paging is not triggered. Consequently, service session establishment is unstable, which means that the session may be connected sometimes, and may be disconnected sometimes. To provide stable quality of service for user terminals, Internet service providers have to cooperate with telecom operators, and pay fees for overheads in establishing a radio connection. In this way, benefits of the telecom operators are protected.

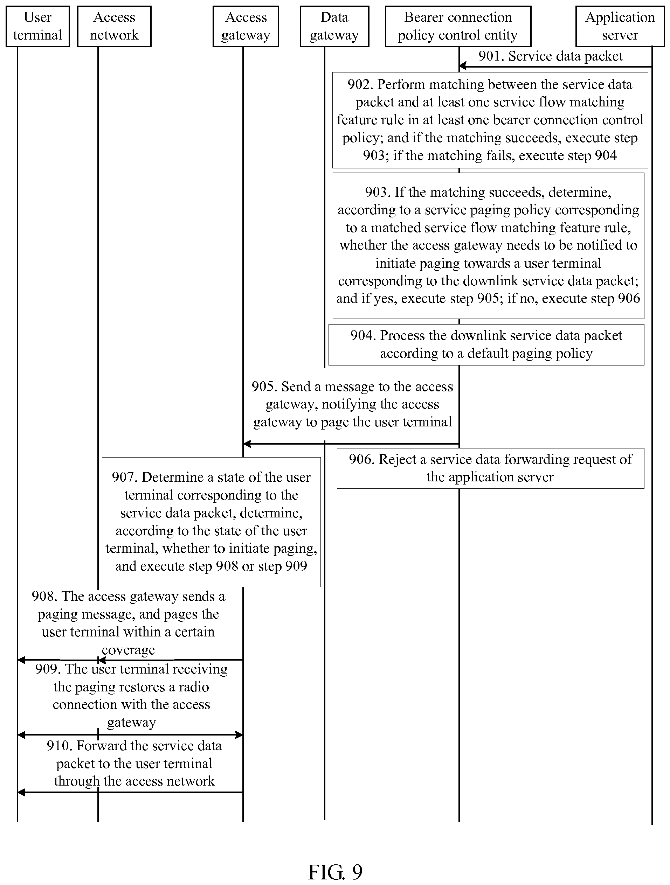

Referring to FIG. 9, FIG. 9 is a flowchart of a second application instance of a paging control method according to an embodiment of the present invention. In this embodiment, a radio access network may be an access technology such as a UTRAN, a GERAN, an E-UTRAN or the like; an access gateway may be an SGSN, an MME, an SGW, or an AGW; a data gateway may be a GGSN or a PDN-GW; and an application server may be an AF and is configured to provide a variety of services. In this embodiment, a network operator reaches an agreement with a service provider, so that the first message pushed by an application server to a user terminal or a session establishment message sent by an application server, which may require paging towards the user terminal, are not transmitted directly through a user plane channel with the data gateway, but are sent to a bearer connection policy control entity, and the bearer connection policy control entity sends the messages to an access gateway. The method includes the following steps:
Step 901: An application server sends a service data packet of a mobile terminated service to a bearer connection policy control entity.

In this step, when the application server sends a service data packet of a mobile terminated service, if the service data packet needs to be forwarded by the bearer connection policy control entity in accordance with the agreement with the network operator, the application server sends the service data packet to the bearer connection policy control entity.

Step 902: After receiving the service data packet, the bearer connection policy control entity performs matching between the service data packet and at least one service data flow matching feature rule in at least one preset bearer connection policy; and if the matching succeeds, executes step 903; if the matching fails, executes step 904.

The bearer connection policy may be configured on the bearer connection policy control entity in advance, or may be delivered by a network element such as an OAM unit, which is not limited in this embodiment.

Step 903: If the matching succeeds, determine, according to a service paging policy corresponding to a matched service data flow matching feature rule, whether an access gateway needs to be notified to initiate paging towards a user terminal corresponding to the downlink service data packet; and if yes, execute step 905; if not, execute step 906.

Step 904: If the matching fails, process the downlink service data packet according to a default paging policy.

The default paging policy may be to notify the access gateway to initiate paging towards the user terminal corresponding to the downlink service data packet, or to reject a service data forwarding request of the application server, or to discard the downlink service data packet, which is not limited in this embodiment.

A process of determining a paging policy for the user terminal by the bearer connection policy control entity and the access gateway is similar to the process of determining a paging policy by the access gateway in this embodiment, and details are not further described herein.

Step 905: The bearer connection policy control entity sends a message to the access gateway to notify the access gateway to page the user terminal, where the notification message may carry a paging priority parameter.

Optionally, the bearer connection policy control entity may charge fees for the forwarded service data, so as to implement settlement with the service provider.

Step 906: The bearer connection policy control entity rejects the service data forwarding request of the application server.

Further, for a downlink service data packet that is determined to be forwarded, the bearer connection policy control entity may further include, in the service paging policy delivered to the access gateway, a connection persistence policy for a service data flow corresponding to the service data packet, where the connection persistence policy is used to indicate whether the access gateway is allowed to initiate paging towards the user terminal in a specific subsequent time if the radio connection of the user terminal has already been released after a data packet corresponding to the service data flow is delivered from the data gateway to the access gateway. This processing is intended to ensure connectivity of a path between the application server and the user terminal when the path is transparent to an application in a time after the path is established under the control of the bearer connection policy control entity.

Step 907: After receiving the service data packet, the access gateway determines a state of the user terminal corresponding to the service data packet; if the user terminal is in connected state, the access gateway forwards the service data packet; and if a radio connection of the user terminal has already been released (namely, the user equipment is in idle state), the access gateway initiates a paging procedure. In other words, the access gateway determines a state of the user terminal corresponding to the service data packet, and determines, according to the state of the user terminal, whether to initiate paging, and executes step 808 or step 809.

Further, the access gateway initiates paging of a corresponding priority towards the user terminal according to the received paging priority parameter which is delivered by the bearer connection policy control entity.

Further, the access gateway determines, according to the received service paging policy which is delivered by the bearer connection policy control entity, to execute the connection persistence policy for the user terminal corresponding to the service data packet over a subsequent preset period of time. The policy is used to indicate whether the access gateway is allowed to initiate paging towards the user terminal in a specific subsequent time if the radio connection of the user terminal has already been released after a data packet corresponding to the service data flow is delivered from the data gateway to the access gateway. When a user plane data packet is delivered from the data gateway to the access gateway but the radio connection of the user terminal has already been released, the access gateway determines, according to the connection persistence policy delivered by the bearer connection control entity, whether to page the terminal or discard the downlink service data packet without paging the terminal.

Step 908: The access gateway sends a paging message, and pages the user terminal within a certain coverage.

Step 909: The user terminal receiving the paging restores a radio connection with the access gateway.

Step 910: The access gateway forwards the service data packet to the user terminal through an access network.

In this embodiment, there are two manners of sending the service data packet and the notification message. One manner is as follows: The service data packet may be added by the bearer connection control entity to the notification message when the bearer connection control entity notifies the access gateway to page the terminal in step 905, namely, the bearer connection control entity sends the service data packet and the notification message together to the access gateway. The other manner is as follows: The bearer connection control entity sends the notification message first to notify the access gateway of the paging policy; and then the access gateway initiates a paging procedure, and sends an acknowledgement message to the bearer connection control entity after a connection of the user terminal is established or when the user terminal is in connected state; finally, the bearer connection control entity sends the service data packet to the access gateway; and after receiving the acknowledgement message from the access gateway, the bearer connection control entity charges fees for the event.

In this embodiment, when a user plane data packet is delivered from the data gateway to the access gateway but the radio connection of the user terminal has already been released, the access gateway determines, according to the paging priority and the connection persistence policy which are delivered by the bearer connection control entity, whether to page the terminal normally, page the terminal preferentially, discard the downlink service data packet without paging the terminal, or lower a priority of the paging.

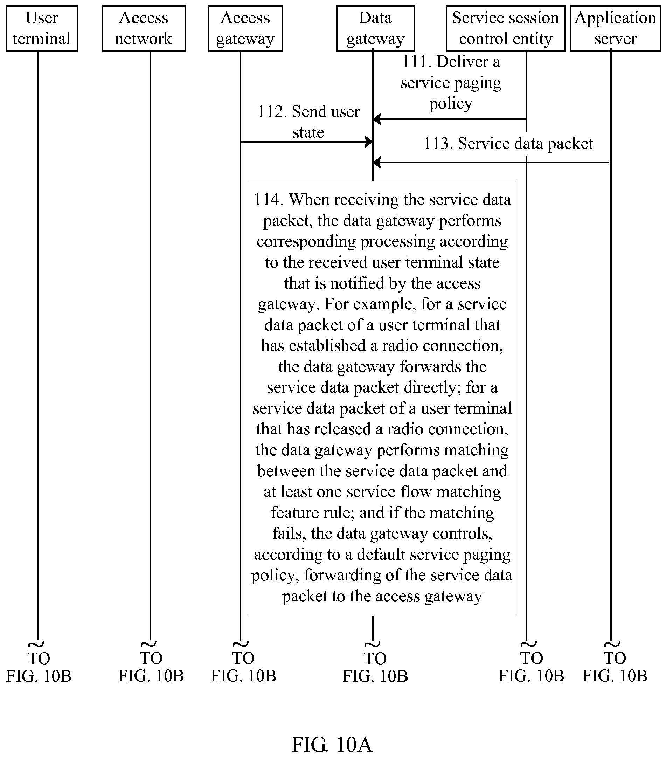

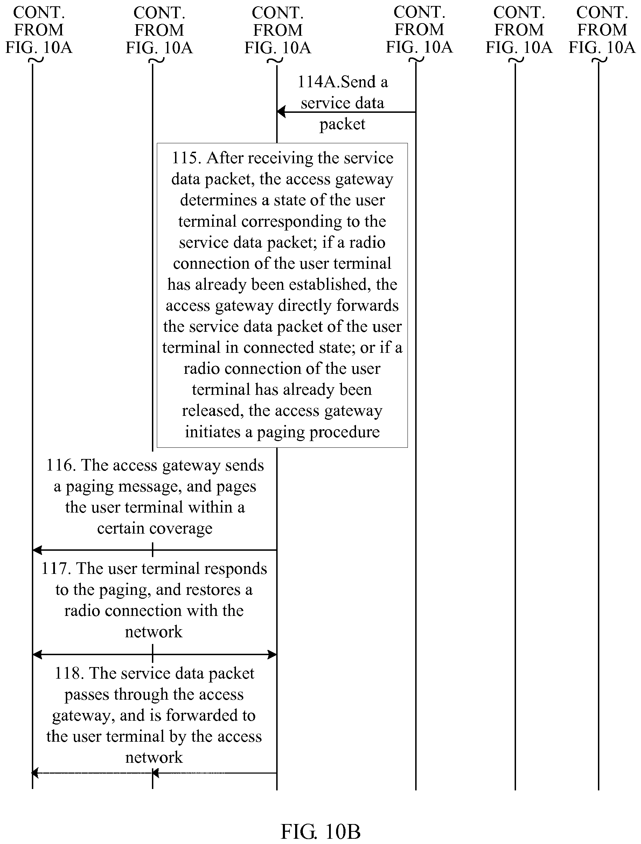

Referring to FIG. 10.A and FIG. 10B, FIG. 10A and FIG. 10B are a flowchart of a third application instance of a paging control method according to an embodiment of the present invention. In this embodiment, when a connection state of a user terminal is changed, an access gateway notifies a data gateway, and the data gateway acquires the connection state of the user terminal; when the data gateway receives a downlink data packet, if a radio connection of the user terminal has already been released but a service paging policy matching the downlink data packet indicates no paging, the data gateway may discard the data packet directly and skip charging.

In this embodiment, a radio access network may be an access technology such as a UTRAN, a GERAN, an E-UTRAN or the like; an access gateway may be an SGSN, an MME, an SGW, or an AGW; a data gateway may be a GGSN or a PDN-GW; and an application server is an AF and is configured to provide a variety of services. The method includes the following steps.

Specific steps of the paging control method provided in this embodiment are as follows:
Step 111: A bearer connection policy control entity delivers a bearer connection control policy to a data gateway.

The bearer connection policy control entity delivers a service policy to the data gateway according to a service cooperation relationship between a network operator and an Internet service provider. The bearer connection policy control entity may be a network element co-located with a PCRF, or may be a network element such as an operation and maintenance unit. The bearer connection control policy includes but is not limited to a service data flow matching feature rule and/or a service paging policy.

In a specific implementation, the bearer connection policy control entity may deliver the bearer connection control policy by using a signaling message in an ongoing signaling procedure on a mobile communications network. The bearer connection policy control entity may also deliver the bearer connection control policy by initiating a signaling procedure pro actively.

Step 112: The access gateway notifies a state of a user terminal to the data gateway.

The state of the user terminal includes connected state and idle state.

For example, when a radio connection of the user terminal is released, the access gateway notifies, to each data gateway, the state of the user terminal by using a signaling message. The data gateway is a node with which the user terminal has established a packet data network connection (Packet Data Network Connection: PDN Connection).

Step 113: An application server sends a service data packet to the data gateway.

Step 114: When receiving the service data packet, the data gateway performs corresponding processing according to the received state of the user terminal which is notified by the access gateway. For example, for a service data packet of a user terminal for which a radio connection is established, the data gateway forwards the service data packet directly; for a service data packet of a user terminal for which a radio connection has already been released, the data gateway performs matching between the service data packet and at least one service data flow matching feature rule, and if the matching fails, controls forwarding of the service data packet to the access gateway according to a default service paging policy, namely, executes step 114A.

In other words, if the user terminal is in connected state, the data gateway forwards the received service data packet of the user terminal to the access gateway directly; if the user terminal is in idle state, the data gateway performs matching between the service data packet and at least one service data flow matching feature rule, and controls forwarding of the downlink service data packet according to a service paging policy corresponding to a matched service data flow matching feature rule. In other words, if the service paging policy indicates no paging, the data gateway discards the service data packet directly, and does not perform charging. If the service paging policy is that the user terminal needs to be paged, the data gateway forwards the service data packet to the access gateway. In a case in which no service data flow matching feature rule is matched, the data gateway controls forwarding of the downlink service data packet according to a default service paging policy, for example, it forwards the service data packet or discards the service data packet directly.

Step 115: After receiving the service data packet, the access gateway determines a state of the user terminal corresponding to the service data packet; if a radio connection of the user terminal has already been established, the access gateway directly forwards the service data packet of the user terminal in connected state; if the radio connection of the user terminal has already been released, the access gateway initiates a paging procedure.

Step 116: The access gateway sends a paging message, and pages the user terminal within a certain coverage.

Step 117: The user terminal responds to the paging by restoring a radio connection with the network.

Step 118: The service data packet is forwarded, through the access gateway, to the user terminal by the access network.

In this embodiment, the service policy may also be configured on the data gateway; or the service data flow matching feature rule is delivered from the bearer connection policy control entity to the data gateway while the service paging policy is configured on the data gateway; or the service paging policy is delivered from the bearer connection policy control entity to the data gateway while the service data flow matching feature rule is configured on the data gateway.

Further, considering the case in which when the user terminal is in connected state, there is no radio data channel for some bearers/packet data protocol (Packet Data Protocol: PDP) contexts on the network, the access gateway may further notify a corresponding data gateway of states of some bearers/PDP contexts. After a radio data channel for a bearer/a PDP context corresponding to a specific ARP, QCI or APN is released, the access gateway sends a message to the data gateway. After the data gateway receives a downlink service data packet corresponding to the bearer/PDP context, if the state of the bearer/PDP context is that no radio data channel is available, the data gateway executes a corresponding bearer connection control policy according to step 904.

In this embodiment, a data gateway is allowed to perceive connected state of a user terminal, so that the data gateway can charge more accurately, and the data gateway does not charge fees for a discarded service data packet. For some services, a service data packet forwarding channel on a mobile communications network is unstable, and the service data packet may be discarded, delayed, or sent with a lower priority. To provide stable service quality for user terminals, an Internet service provider has to cooperate with a telecom operator, and pays fees for overheads in maintaining a radio connection. In which case, benefits of the telecom operator are protected. Higher fees to be paid by a user terminal for an Internet voice/messaging services may reduce use frequency of the services, which in turn reduces a load on the mobile communications network.

It can been seen from the foregoing embodiments of the present invention, a bearer network of an operator is aware of establishment of application layer sessions, so that the bearer network can control establishment of the application layer sessions according to a user terminal state. In which case, Internet service providers have to pay an appropriate fee for radio connection maintenance and benefits of telecom operators are protected. In addition, by using a price leverage, unlimited use of Internet voice/information services by user terminals is reduced, thereby avoiding impact on the mobile communications networks.

It should be noted that in this specification, relational terms such as first and second are only used to distinguish one entity or operation from another, and do not necessarily require or imply that any actual relationship or sequence exists between these entities or operations. Moreover, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the existence of additional identical elements in the process, method, article, or apparatus that includes the element.

Based on the foregoing descriptions of the embodiments, a person skilled in the art may clearly understand that the present invention may be implemented by software in addition to a necessary universal hardware platform or by hardware only. In most circumstances, the former is a preferred implementation. Based on such an understanding, the technical solutions of the present invention essentially or the part contributing to the prior art may be implemented in a form of a software product. The software product may be stored in a storage medium, such as a ROM/RAM, a magnetic disk, or an optical disc, and includes several instructions for instructing a computer device (which may be a personal computer, a server, or a network device) to perform the methods described in the embodiments or some parts of the embodiments of the present invention.

## Claims

1. A paging control method, comprising:
receiving (101) a downlink service data packet;
determining (102) whether a user terminal corresponding to the downlink service data packet is in idle state; and
if the user terminal is in idle state, performing matching between the downlink service data packet and at least one bearer connection control policy, and controlling (103), according to a matched bearer connection control policy, paging towards the user terminal corresponding to the downlink service data packet;
wherein performing matching between the downlink service data packet and at least one bearer connection control policy comprises performing, by a bearer connection policy control entity, matching between the downlink service data packet and at least one service data flow matching feature rule in the at least one bearer connection control policy;
**characterised in that** controlling, according to a matched bearer connection control policy, paging towards the user terminal corresponding to the downlink service data packet comprises:
if the matching succeeds, determining, according to a service paging policy corresponding to a matched service data flow matching feature rule, whether an access gateway needs to be notified to initiate paging towards the user terminal corresponding to the downlink service data packet;
if the access gateway needs to be notified, notifying the access gateway to initiate paging towards the user terminal corresponding to the downlink service data packet; and delivering, by the bearer connection policy control entity, a connection persistence policy for a service data flow corresponding to the downlink service data packet to the access gateway, so that the access gateway executes, after receiving the connection persistence policy, the connection persistence policy for the user terminal corresponding to the downlink service data packet over a subsequent preset period of time, wherein the connection persistence policy indicates whether the access gateway is allowed to initiate paging towards the user terminal in a specific subsequent time if the radio connection of the user terminal has already been released after the downlink service data packet is delivered to the access gateway; and
if the access gateway does not need to be notified, refusing to forward the downlink service data packet.

2. The method according to claim 1, further comprising:
if the user terminal is in connected state, forwarding the downlink service data packet to the user terminal.

3. The method according to claim 1 or 2, wherein the bearer connection control policy is stored in the access gateway in advance, or the bearer connection control policy is acquired by the access gateway from a bearer connection policy control entity, or the bearer connection control policy is acquired by the access gateway from the bearer connection policy control entity through a data gateway.

4. The method according to claim 1, wherein the notification comprises paging priority parameter information, so that the access gateway initiates, according to the paging priority parameter information, paging towards the user terminal corresponding to the downlink service data packet.

5. A paging control apparatus, comprising:
a first receiving unit (21), configured to receive a downlink service data packet;
a determining unit (22), configured to determine whether a user terminal corresponding to the downlink service data packet is in idle state; and
a paging control unit (23), configured to: when the determining unit determines that the user terminal is in idle state, perform matching between the downlink service data packet and at least one bearer connection control policy, and control, according to a matched bearer connection control policy, paging towards the user terminal corresponding to the downlink service data packet;
wherein the paging control unit comprises:
a second matching unit (51), configured to perform matching between the downlink service data packet and at least one service data flow matching feature rule in the at least one bearer connection control policy;
**characterised by**: a judging unit (52), configured to: when the matching performed by the second matching unit succeeds, determine, according to a service paging policy corresponding to a matched service data flow matching feature rule, whether an access gateway needs to be notified to initiate paging towards the user terminal corresponding to the downlink service data packet;
a notifying unit (53), configured to: when the judging unit determines that an access gateway needs to be notified, notify the access gateway to initiate paging towards the user terminal corresponding to the downlink service data packet;
a first discarding unit (54), configured to: when the judging unit determines that the access gateway does not need to be notified, discard the downlink service data packet; and the paging control apparatus further comprises:
a second sending unit, configured to: when the notifying unit notifies the access gateway to initiate paging towards the user terminal corresponding to the downlink service data packet, deliver a connection persistence policy for a service data flow corresponding to the downlink service data packet to the access gateway, so that the access gateway executes, after receiving the connection persistence policy, the connection persistence policy for the user terminal corresponding to the downlink service data packet over a subsequent preset period of time, wherein the connection persistence policy indicates whether the access gateway is allowed to initiate paging towards the user terminal in a specific subsequent time if the radio connection of the user terminal has already been released after the downlink service data packet is delivered to the access gateway.

6. The apparatus according to claim 5, further comprising:
a first forwarding unit (31), configured to: when the determining unit determines that the user terminal is in connected state, forward the downlink service data packet to the user terminal.

7. The apparatus according to claim 5, further comprising:
a first sending unit, configured to: when the notifying unit notifies the access gateway to initiate paging towards the user terminal corresponding to the downlink service data packet, deliver paging priority parameter information corresponding to the downlink service data packet to the access gateway, so that after receiving the paging priority parameter information, the access gateway initiates, according to the paging priority parameter information, paging towards the user terminal corresponding to the downlink service data packet.

## Patentansprüche

1. Funkrufsteuerungsverfahren, das Folgendes umfasst:
Empfangen (101) eines Downlink-Dienstdatenpakets;
Bestimmen (102), ob sich eine Benutzervorrichtung entsprechend dem Downlink-Dienstdatenpaket in einem inaktiven Zustand befindet; und
wenn sich die Benutzervorrichtung in einem inaktiven Zustand befindet, Durchführen einer Abstimmung zwischen dem Downlink-Dienstdatenpaket und mindestens einer Trägerverbindungssteuerungsrichtlinie und Steuern (103) gemäß einer abgestimmten Trägerverbindungssteuerungsrichtlinie eines Funkrufs zu der Benutzervorrichtung entsprechend dem Downlink-Dienstdatenpaket;
wobei das Durchführen einer Abstimmung zwischen dem Downlink-Dienstdatenpaket und mindestens einer Trägerverbindungssteuerungsrichtlinie das Durchführen durch eine Trägerverbindungsrichtliniensteuerungseinheit einer Abstimmung zwischen dem Downlink-Dienstdatenpaket und mindestens einer Dienstdatenflussabstimmungsmerkmalsregel in der mindestens einen Trägerverbindungssteuerungsrichtlinie umfasst;
**dadurch gekennzeichnet, dass** das Steuern gemäß einer abgestimmten Trägerverbindungssteuerungsrichtlinie eines Funkrufs zu der Benutzervorrichtung entsprechend dem Downlink-Dienstdatenpaket Folgendes umfasst:
wenn die Abstimmung erfolgreich ist, Bestimmen gemäß einer Dienstfunkrufrichtlinie entsprechend einer abgestimmten Dienstdatenflussabstimmungsmerkmalsregel, ob ein Zugangs-Gateway benachrichtigt werden muss, um einen Funkruf zu der Benutzervorrichtung entsprechend dem Downlink-Dienstdatenpaket zu starten;
wenn das Zugangs-Gateway benachrichtigt werden muss, Benachrichtigen des Zugangs-Gateways, um einen Funkruf zu der Benutzervorrichtung entsprechend dem Downlink-Dienstdatenpaket zu starten; und derartiges Liefern durch die Trägerverbindungsrichtliniensteuerungseinheit einer Verbindungsbeständigkeitsrichtlinie für einen Dienstdatenfluss entsprechend dem Downlink-Dienstdatenpaket an das Zugangs-Gateway, dass das Zugangs-Gateway nach dem Erhalten der Verbindungsbeständigkeitsrichtlinie die Verbindungsbeständigkeitsrichtlinie für die Benutzervorrichtung entsprechend dem Downlink-Dienstdatenpaket über einen darauffolgenden vorab festgelegten Zeitraum ausführt, wobei die Verbindungsbeständigkeitsrichtlinie angibt, ob dem Zugangs-Gateway erlaubt ist, einen Funkruf zu der Benutzervorrichtung zu einem bestimmten darauffolgenden Zeitpunkt, wenn die Funkverbindung der Benutzervorrichtung bereits freigegeben worden ist, nachdem das Downlink-Dienstdatenpaket dem Zugangs-Gateway geliefert wurde, zu starten; und
wenn das Zugangs-Gateway nicht benachrichtigt werden muss, Verweigern des Weiterleitens des Downlink-Dienstdatenpakets.

2. Verfahren nach Anspruch 1, das ferner Folgendes umfasst:
wenn sich die Benutzervorrichtung in einem verbundenen Zustand befindet, Weiterleiten des Downlink-Dienstdatenpakets zu der Benutzervorrichtung.

3. Verfahren nach Anspruch 1 oder 2, wobei die Trägerverbindungssteuerungsrichtlinie vorab in dem Zugangs-Gateway gespeichert wird oder die Trägerverbindungssteuerungsrichtlinie durch das Zugangs-Gateway von einer Trägerverbindungsrichtliniensteuerungseinheit erhalten wird oder die Trägerverbindungssteuerungsrichtlinie durch das Zugangs-Gateway von der Trägerverbindungsrichtliniensteuerungseinheit durch ein Daten-Gateway erhalten wird.

4. Verfahren nach Anspruch 1, wobei die Benachrichtigung derart Funkrufprioritätsparameterinformationen aufweist, dass das Zugangs-Gateway gemäß den Funkrufprioritätsparameterinformationen einen Funkruf zu der Benutzervorrichtung entsprechend dem Downlink-Dienstdatenpaket startet.

5. Funkrufsteuerungsvorrichtung, die Folgendes aufweist:
eine erste Empfangseinheit (21), die konfiguriert ist, um ein Downlink-Dienstdatenpaket zu empfangen;
eine Bestimmungseinheit (22), die konfiguriert ist, um zu bestimmen, ob sich eine Benutzervorrichtung entsprechend dem Downlink-Dienstdatenpaket in einem inaktiven Zustand befindet; und
eine Funkrufsteuerungseinheit (23), die konfiguriert ist, um: wenn die Bestimmungseinheit bestimmt, dass sich die Benutzervorrichtung in einem inaktiven Zustand befindet, eine Abstimmung zwischen dem Downlink-Dienstdatenpaket und mindestens einer Trägerverbindungssteuerungsrichtlinie durchzuführen und gemäß einer abgestimmten Trägerverbindungssteuerungsrichtlinie einen Funkruf zu der Benutzervorrichtung entsprechend dem Downlink-Dienstdatenpaket zu steuern;
wobei die Funkrufsteuerungseinheit Folgendes aufweist:
eine zweite Abstimmungseinheit (51), die konfiguriert ist, um eine Abstimmung zwischen dem Downlink-Dienstdatenpaket und mindestens einer Dienstdatenflussabstimmungsmerkmalsregel in der mindestens einen Trägerverbindungssteuerungsrichtlinie durchzuführen;
**gekennzeichnet durch**: eine Beurteilungseinheit (52), die konfiguriert ist, um: wenn die Abstimmung, die durch die zweite Abstimmungseinheit vorgenommen wird, erfolgreich ist, gemäß einer Dienstfunkrufrichtlinie entsprechend einer abgestimmten Dienstdatenflussabstimmungsmerkmalsregel zu bestimmen, ob ein Zugangs-Gateway benachrichtigt werden muss, um einen Funkruf zu der Benutzervorrichtung entsprechend dem Downlink-Dienstdatenpaket zu starten;
eine Benachrichtigungseinheit (53), die konfiguriert ist, um: wenn die Beurteilungseinheit bestimmt, dass ein Zugangs-Gateway benachrichtigt werden muss, das Zugangs-Gateway zu benachrichtigen, um einen Funkruf zu der Benutzervorrichtung entsprechend dem Downlink-Dienstdatenpaket zu starten;
eine erste Verwerfeinheit (54), die konfiguriert ist, um: wenn die Beurteilungseinheit bestimmt, dass das Zugangs-Gateway nicht benachrichtigt werden muss, das Downlink-Dienstdatenpaket zu verwerfen; und wobei die Funkrufsteuervorrichtung ferner Folgendes aufweist:
eine zweite Sendeeinheit, die konfiguriert ist, um: wenn die Benachrichtigungseinheit das Zugangs-Gateway benachrichtigt, um einen Funkruf zu der Benutzervorrichtung entsprechend dem Downlink-Dienstdatenpaket zu starten, derart eine Verbindungsbeständigkeitsrichtlinie für einen Dienstdatenfluss entsprechend dem Downlink-Dienstdatenpaket zu dem Zugangs-Gateway zu liefern, dass das Zugangs-Gateway nach dem Erhalten der Verbindungsbeständigkeitsrichtlinie die Verbindungsbeständigkeitsrichtlinie für die Benutzervorrichtung entsprechend dem Downlink-Dienstdatenpaket über einen darauffolgenden vorab festgelegten Zeitraum ausführt, wobei die Verbindungsbeständigkeitsrichtlinie angibt, ob dem Zugangs-Gateway erlaubt ist, einen Funkruf zu der Benutzervorrichtung zu einem bestimmten darauffolgenden Zeitpunkt zu starten, wenn die Funkverbindung der Benutzervorrichtung bereits freigegeben worden ist, nachdem das Downlink-Dienstdatenpaket dem Zugangs-Gateway geliefert wurde.

6. Vorrichtung nach Anspruch 5, die ferner Folgendes aufweist:
eine erste Weiterleitungseinheit (31), die konfiguriert ist, um: wenn die Bestimmungseinheit bestimmt, dass sich die Benutzervorrichtung in einem verbundenen Zustand befindet, das Downlink-Dienstdatenpaket zu der Benutzervorrichtung weiterzuleiten.

7. Vorrichtung nach Anspruch 5, die ferner Folgendes aufweist:
eine erste Sendeeinheit, die konfiguriert ist, um: wenn die Benachrichtigungseinheit das Zugangs-Gateway benachrichtigt, um einen Funkruf zu der Benutzervorrichtung entsprechend dem Downlink-Dienstdatenpaket zu starten, derart Funkrufprioritätsparameterinformationen entsprechend dem Downlink-Dienstdatenpaket dem Zugangs-Gateway zu liefern, dass nach dem Empfangen der Funkrufprioritätsparameterinformationen das Zugangs-Gateway gemäß den Funkrufprioritätsparameterinformationen einen Funkruf zu der Benutzervorrichtung entsprechend dem Downlink-Dienstdatenpaket startet.

## Revendications

1. Procédé de contrôle de radiorecherche, consistant à :
recevoir (101) un paquet de données de service de liaison descendante ;
déterminer (102) si un terminal d'utilisateur correspondant au paquet de données de service de liaison descendante est dans un état de repos ; et
si le terminal d'utilisateur est dans un état de repos, réaliser une mise en concordance entre le paquet de données de service de liaison descendante et au moins une stratégie de contrôle de connexion de porteuse, et contrôler (103), selon une stratégie de contrôle de connexion de porteuse mise en concordance, une radiorecherche vers le terminal d'utilisateur correspondant au paquet de données de service de liaison descendante ;
la réalisation d'une mise en concordance entre le paquet de données de service de liaison descendante et au moins une stratégie de contrôle de connexion de porteuse consistant à réaliser, par une entité de contrôle de stratégie de connexion de porteuse,
une mise en concordance entre le paquet de données de service de liaison descendante et au moins un flux de données de service concordant avec une règle d'attribut dans l'au moins une stratégie de contrôle de connexion de porteuse ;
le procédé étant **caractérisé en ce que** le contrôle, selon une stratégie de contrôle de connexion de porteuse mise en concordance, d'une radiorecherche vers le terminal d'utilisateur correspondant au paquet de données de service de liaison descendante, consiste à :
si la mise en concordance réussit, déterminer, selon une stratégie de radiorecherche de service correspondant à un flux de données de service mis en concordance concordant avec une règle d'attribut, si une passerelle d'accès doit être notifiée pour amorcer une radiorecherche vers le terminal d'utilisateur correspondant au paquet de données de service de liaison descendante ;
si la passerelle d'accès doit être notifiée, notifier à la passerelle d'accès d'amorcer une radiorecherche vers le terminal d'utilisateur correspondant au paquet de données de service de liaison descendante ; et fournir à la passerelle d'accès, par l'entité de contrôle de stratégie de connexion de porteuse, une stratégie de persistance de connexion pour un flux de données de service correspondant au paquet de données de service de liaison descendante, de sorte que la passerelle d'accès exécute, après la réception de la stratégie de persistance de connexion, la stratégie de persistance de connexion pour le terminal d'utilisateur correspondant au paquet de données de service de liaison descendante pendant une période de temps prédéfinie ultérieure, la stratégie de persistance de connexion indiquant si la passerelle d'accès est autorisée à amorcer une radiorecherche vers le terminal d'utilisateur pendant une durée ultérieure spécifique si la connexion radio du terminal d'utilisateur a déjà été libérée après la fourniture du paquet de données de service de liaison descendante à la passerelle d'accès ; et
si la passerelle d'accès n'a pas besoin d'être notifiée, refuser de transférer le paquet de données de service de liaison descendante.

2. Procédé selon la revendication 1, consistant en outre à :
si le terminal d'utilisateur est dans un état connecté, transférer le paquet de données de service de liaison descendante au terminal d'utilisateur.

3. Procédé selon la revendication 1 ou 2, dans lequel la stratégie de contrôle de connexion de porteuse est stockée à l'avance dans la passerelle d'accès, ou la stratégie de contrôle de connexion de porteuse est acquise par la passerelle d'accès auprès d'une entité de contrôle de stratégie de connexion de porteuse, ou la stratégie de contrôle de connexion de porteuse est acquise par la passerelle d'accès auprès de l'entité de contrôle de stratégie de connexion de porteuse par l'intermédiaire d'une passerelle de données.

4. Procédé selon la revendication 1, dans lequel la notification comprend une information de paramètre de priorité de radiorecherche, de sorte que la passerelle d'accès amorce, selon l'information de paramètre de priorité de radiorecherche, une radiorecherche vers le terminal d'utilisateur correspondant au paquet de données de service de liaison descendante.

5. Appareil de contrôle de radiorecherche, comprenant :
une première unité de réception (21), configurée pour recevoir un paquet de données de service de liaison descendante ;
une unité de détermination (22), configurée pour déterminer si un terminal d'utilisateur correspondant au paquet de données de service de liaison descendante est dans un état de repos ; et
une unité de contrôle de radiorecherche (23), configurée pour : quand l'unité de détermination détermine que le terminal d'utilisateur est dans un état de repos, réaliser une mise en concordance entre le paquet de données de service de liaison descendante et au moins une stratégie de contrôle de connexion de porteuse, et contrôler, selon une stratégie de contrôle de connexion de porteuse mise en concordance, une radiorecherche vers le terminal d'utilisateur correspondant au paquet de données de service de liaison descendante ;
l'unité de contrôle de radiorecherche comprenant :
une seconde unité de mise en concordance (51), configurée pour réaliser une mise en concordance entre le paquet de données de service de liaison descendante et au moins un flux de données de service concordant avec une règle d'attribut dans l'au moins une stratégie de contrôle de connexion de porteuse ;
l'appareil étant **caractérisé par** :
une unité de jugement (52), configurée pour : quand la mise en concordance réalisée par la seconde unité de mise en concordance réussit, déterminer, selon une stratégie de radiorecherche de service correspondant à un flux de données de service mis en concordance concordant avec une règle d'attribut, si une passerelle d'accès doit être notifiée pour amorcer une radiorecherche vers le terminal d'utilisateur correspondant au paquet de données de service de liaison descendante ;
une unité de notification (53), configurée pour : quand l'unité de jugement détermine qu'une passerelle d'accès doit être notifiée, notifier à la passerelle d'accès d'amorcer une radiorecherche vers le terminal d'utilisateur correspondant au paquet de données de service de liaison descendante ;
une première unité de rejet (54), configurée pour : quand l'unité de jugement détermine que la passerelle d'accès n'a pas besoin d'être notifiée, rejeter le paquet de données de service de liaison descendante ; et
l'appareil de contrôle de radiorecherche comprenant en outre :
une seconde unité d'envoi, configurée pour : quand l'unité de notification notifie à la passerelle d'accès d'amorcer une radiorecherche vers le terminal d'utilisateur correspondant au paquet de données de service de liaison descendante, fournir à la passerelle d'accès, par l'entité de contrôle de stratégie de connexion de porteuse, une stratégie de persistance de connexion pour un flux de données de service correspondant au paquet de données de service de liaison descendante, de sorte que la passerelle d'accès exécute, après la réception de la stratégie de persistance de connexion, la stratégie de persistance de connexion pour le terminal d'utilisateur correspondant au paquet de données de service de liaison descendante pendant une période de temps prédéfinie ultérieure, la stratégie de persistance de connexion indiquant si la passerelle d'accès est autorisée à amorcer une radiorecherche vers le terminal d'utilisateur pendant une durée ultérieure spécifique si la connexion radio du terminal d'utilisateur a déjà été libérée après la fourniture du paquet de données de service de liaison descendante à la passerelle d'accès.

6. Appareil selon la revendication 5, comprenant en outre :
une première unité de transfert (31), configurée pour : quand l'unité de détermination détermine que le terminal d'utilisateur est dans un état connecté, transférer le paquet de données de service de liaison descendante au terminal d'utilisateur.

7. Appareil selon la revendication 5, comprenant en outre :
une première unité d'envoi, configurée pour : quand l'unité de notification notifie à la passerelle d'accès d'amorcer une radiorecherche vers le terminal d'utilisateur correspondant au paquet de données de service de liaison descendante, fournir à la passerelle d'accès une information de paramètre de priorité de radiorecherche correspondant au paquet de données de service de liaison descendante, de sorte qu'après la réception de l'information de paramètre de priorité de radiorecherche, la passerelle d'accès amorce, selon l'information de paramètre de priorité de radiorecherche, une radiorecherche vers le terminal d'utilisateur correspondant au paquet de données de service de liaison descendante.
